# EUROPÄISCHE PATENTSCHRIFT

(11) **EP 2 386 057 B1**
(45) Veröffentlichungstag und Bekanntmachung des Hinweises auf die Patenterteilung: **20.02.2019**
(21) Anmeldenummer: 10700691.8
(22) Anmeldetag: 08.01.2010
(51) Int. Cl.: G01N 21/15, G01N 21/552, G01N 21/85, G01N 21/35

(54) **EINRICHTUNG ZUR FTIR-ABSORPTIONSSPEKTROSKOPIE**
DEVICE FOR FTIR ABSORPTION SPECTROSCOPY
DISPOSITIF DE SPECTROSCOPIE D'ABSORPTION FTIR

(30) Priorität: 08.01.2009 AT 262009; 09.01.2009 AT 302009
(43) Veröffentlichungstag der Anmeldung: 16.11.2011
(73) Patentinhaber: Technische Universität Wien, 1040 Wien (AT)
(72) Erfinder: LENDL, Bernhard, A-1160 Wien (AT); RADEL, Stefan, A-1140 Wien (AT); BRANDSTETTER, Markus, A-3321 Ardagger (AT)
(74) Vertreter: Puchberger & Partner Patentanwälte
(86) Internationale Anmeldenummer: PCT/AT2010/000006
(87) Internationale Veröffentlichungsnummer: WO 2010/078612

(56) Entgegenhaltungen:
- WO-A1-2005/124300
- DE-A1- 3 937 554
- DE-A1- 4 333 560
- GB-A- 1 604 691
- JP-A- 4 332 852
- RADEL S ET AL: "Ultrasonic particle manipulation exploited in on-line infrared spectroscopy of (cell) suspensions" ELEKTROTECHNIK UND INFORMATIONSTECHNIK, Bd. 125, Nr. 3, 1. März 2008 (2008-03-01), Seiten 76-81, XP002576865 DOI: 10.1007/s00502-008-0514-3

## Beschreibung

### Gebiet der Erfindung

Die Beschreibung betrifft eine Einrichtung zur FTIR-Absorptionsspektroskopie, mit einem ATR-Sensor sowie mit wenigstens einem Ultraschallsender zur Erzeugung eines Ultraschallfeldes in der Art einer Stehwelle.

### Hintergrund der Erfindung

Absorptionsspektroskopie, insbesondere mit Hilfe von Infrarot, wird vielfach zur Feststellung bestimmter Substanzen, beispielsweise im Zuge der Überwachung von Prozessen, eingesetzt. Hierzu werden gemäß Stand der Technik Durchflusszellen verwendet, durch die die zu detektierenden Substanzen mit Hilfe von Trägerflüssigkeiten hindurch geleitet werden. Für eine derartige Prozessüberwachung ist in der WO 02/082 061 A und WO 2005/124 300 A bereits der Einsatz einer FTIR-ATR-Durchflusszelle vorgeschlagen worden (FTIR-Fouriertransformations-Infrarot; ATR-attenuierte Totalreflexion); hierbei wird ein Sensorelement in Form eines ATR-Kristalls, etwa ein Diamant, verwendet, in dem eine Totalreflexion von eingeleiteter Infrarotstrahlung im Zuge der Spektroskopie stattfindet, wobei die Totalreflexion an den Grenzflächen des ATR-Kristalls abhängig von der Anlagerung (Sedimentation) der zu detektierenden Substanzen (Teilchen) abgeschwächt ("attenuiert") wird. Ein Problem kann dabei die Verunreinigung des in der Durchflusszelle verwendeten Sensors durch die Substanzen verursachen, und dies insbesondere dann, wenn es sich um biotechnologische Prozesse bzw. Fermentationsprozesse handelt, die zu überwachen sind, wobei die in einem Fermentationsmedium produzierten Substanzen und deren Gehalt, aber auch Mikroorganismen und deren physiologischer Status überwacht werden können. Zur Reinigung des ATR-Kristalls wurde in der Vergangenheit zumeist ein chemisches Reinigungsverfahren eingesetzt, wobei die Durchflusszelle mit entsprechenden Reinigungssubstanzen gespült wurde. Die Beseitigung von derartigen polymeren oder organischen Ablagerungen (häufig auch als Biofilm bezeichnet) vom optischen Sensor, also insbesondere vom Diamantfenster eines ATR-Elements, ist jedoch durch den Einsatz von Waschlösungen nur in relativ langen Reinigungszeiten zu bewerkstelligen. Dieses Problem der Filmbildung auf der Sensorfläche ist auch bereits in der US 5 604 132 A angesprochen, wobei dort eine physikalische Reinigung in Form eines Abstreifens angedeutet ist, was aber ebenfalls aufwendig und im Hinblick auf die empfindlichen Kristallflächen problematisch ist.

Gemäß der vorgenannten WO 2005/124 300 A (vgl. auch Radel et al., Elektrotechnik & Informationstechnik 125 (3) (2008): 76-81) ist weiters vorgesehen, zur Verbesserung der Messung bzw. zur Reinigung der Sensorflächen Ultraschall-Stehwellen zur Teilchenmanipulation zu erzeugen. Derartige Ultraschallfelder in Form von "Quasi-Stehwellen" sind gut kontrollierbar, wobei das Ultraschallfeld im Fall des Einsatzes von Piezowandlern (Piezo-Transducer), wie dies bevorzugt wird, einfach durch entsprechende Einstellung des den jeweiligen Piezowandler ansteuernden elektrischen Signals (hinsichtlich Frequenz und Amplitude) gesteuert werden kann. Um die gewünschte - räumliche - Stehwelle zu erhalten, kann die emittierte Ultraschallwelle auf der gegenüberliegenden Seite der Durchflusszelle, etwa am ATR-Sensor, reflektiert werden, wobei die rücklaufende Welle von der abgestrahlten Welle überlagert wird, so dass sich die Stehwelle ausbildet. Bei dieser Stehwelle ist die Hüllkurve der Amplitude in Richtung der Schallausbreitungsrichtung stationär, also zeitlich konstant.
Bei einer solchen Ultraschall-Stehwelle wirken auf in der Durchflusszelle vorhandene, insbesondere auf an der Sensorfläche abgelagerte Teilchen axiale (primäre) Schallstrahlungskräfte, wobei die Wirkung auf die Teilchen, z.B. Zellen, etwa Hefezellen, derart ist, dass diese Teilchen in Richtung der Druckknoten des Stehwellenfeldes gedrängt werden. Demgemäß werden die in der Trägerflüssigkeit suspendierten Teilchen in Ebenen parallel zur Piezo-Transducer-Oberfläche konzentriert, nämlich in der oder den Druckknotenebenen. Da weiters in der Regel das Ultraschallfeld aufgrund der nicht ganz homogenen Ultraschallerzeugung im Piezo-Transducer z.B. in der Mitte stärker ist als am Rand, wirken auf die Teilchen auch transversale primäre Schallstrahlungskräfte, was nach der Konzentration der Teilchen in den Druckknotenebenen dazu führt, dass innerhalb dieser Ebenen auf die Teilchen Kräfte in Richtung vorgegebener Stellen (z.B. Achse der Durchflusszelle) ausgeübt werden, so dass es zu einer verstärkten Agglomeration der Teilchen an diesen Stellen in den Druckknotenebenen kommt; als Resultat wird eine Art Kette von Teilchenagglomeraten erhalten. Diese Konzentration der Teilchen bzw. diese Agglomerate bleibt bzw. bleiben so lange bestehen, solange das Ultraschallfeld eingeschaltet ist. Beim Deaktivieren des Ultraschallfeldes werden die Teilchen durch den Flüssigkeitsfluss aus der Durchflusszelle transportiert.

Bei der Durchführung der Spektroskopie gemäß dieser bekannten Technik weisen die Teilchenagglomerate ferner eine kürzere Sedimentationszeit auf als einzelne Zellen, so dass durch die Verkürzung der Sedimentationszeit raschere Messungen, in kürzeren Intervallen hintereinander, möglich werden; hierbei wird andererseits auch der störenden Ablagerung von Teilchen auf der Sensorfläche, der Biofilmbildung, entgegengewirkt. Untersuchungen haben gezeigt, dass dann, wenn die Teilchen vor dem Absinken auf die Sensorfläche durch Aktivieren des Ultraschallfeldes eine Zeitdauer von beispielsweise 30 s schwebend über dem Sensorelement festgehalten und agglomeriert werden, das so geschaffene Teilchenagglomerat wesentlich schneller sedimentiert als einzelne Teilchen.

Wenngleich sich diese bekannte Technik gemäß WO 05/124 300 A bestens bewährt hat, so ist jedoch ein Nachteil insofern gegeben, als eine eigene Durchflusszelle eingesetzt wird, wobei es notwendig ist, beispielsweise von einem Bioreaktor, der zur Durchführung eines zu überwachenden Prozesses verwendet wird, die zu messenden Substanzen in eigenen Leitungen der Durchflusszelle zuzuführen, von der dann die Substanzen wiederum in den Bioreaktor zurückgeführt werden. Dies bedeutet einen zusätzlichen apparativen Aufwand, und ein weiterer Nachteil ist in der beschriebenen Sedimentationstechnik gelegen, gemäß der das Ablagern von Partikeln auf der Oberfläche des ATR-Sensors abzuwarten ist, bevor eine konkrete Messung durchgeführt wird. Darüber hinaus könnte sich auch, bedingt durch den Transport der Substanzen zur Messstelle außerhalb des Bioreaktors, eine Veränderung der chemischen Parameter ergeben.

In der DE 43 33 560 A1 ist andererseits eine Vorrichtung zur kontinuierlichen spektroskopischen Analyse nach dem Prinzip der abgeschwächten Totalreflexion vorgeschlagen worden, bei der zur Reinigung der Messfläche an einem ATR-Element von Produktrückständen eine Ultraschallquelle verwendet wird, die in der Nähe der Messfläche angeordnet ist. Im Einzelnen werden dabei mit der Ultraschallquelle Ultraschallwellen erzeugt, die gegen die Messfläche gerichtet sind. In einer Ausführungsform mit an einer Reaktorwand über eine Flanschverbindung fixierter Einbausonde ist der Ultraschallquelle ein Reflektor zur Verstärkung der Ultraschallintensität zugeordnet; eine Stehwelle wird dabei allerdings nicht erzeugt.

Aus JP 04-332 852 A ist eine optische Zelle mit einem Messteil bekannt, der sich quer zu einem Halterohr erstreckt und zwei zueinander geneigte optische Fenster aufweist, um einen Lichtdurchtritt zu ermöglichen. Um diese Fenster zu reinigen, d.h. Ablagerungen davon zu entfernen, ist weiters eine Ultraschalleinheit über ein Rohrknie mit dem Messteil-Träger verbunden; mit dieser US-Einheit sollen in Verbindung mit den entsprechend V-förmig angeordneten Fensterflächen Stehwellen erzeugt werden, wobei eine Oszillation zwecks Erzielung eines "Wascheffekts" vorgesehen wird.

In DE 39 37 554 A ist eine Flüssigkeitsüberwachungsanordnung mit einem MIR-Kristall geoffenbart, der in einer Ausführungsform in einem Spalt in einem eine Flüssigkeitskammer definierenden Rohrteil angeordnet und mittels eines äußeren Stützteils gehalten wird; dieses Stützteil ist aus zwei halbkreisförmigen Bügeln zusammengesetzt, die das Rohr im Bereich des Spalts umschließen.

In der US 5 604 132 A ist schließlich eine Überwachung eines chemischen Prozesses mit Hilfe eines in einem eigenen Kreis vorgesehenen Infrarot-Detektors beschrieben, wobei periodisch Proben des Reaktionsgemischs in einen flüssigen Trägerstrom injiziert und dem IR-Detektor zugeführt werden. Dies hat aber mit einer FTIR-Absorptionsspektroskopie nichts zu tun.

### Zusammenfassung der Erfindung

Es ist Aufgabe der Erfindung, eine weitere Verbesserung der Technik mit Stehwellen-Erzeugung vorzusehen und insbesondere mit geringstem Aufwand Direktmessungen zur Überwachung von Prozessen zu ermöglichen, wobei im Weiteren auch das Messverfahren insofern beschleunigt werden soll, als eine Sedimentation von Partikeln auf der Sensorfläche erübrigt werden kann.

Zur Lösung dieser Aufgabe sieht die Erfindung eine Einrichtung zur FTIR-Absorptionsspektroskopie wie in Anspruch 1 definiert vor. Vorteilhafte Ausführungsformen und Weiterbildungen sind in den abhängigen Ansprüchen angegeben.

Im Einzelnen sieht die Erfindung insbesondere vor, dass der ATR-Sensor und der Ultraschallsender mit einer zur Anbringung in einer Öffnung in einer Wand oder Abdeckung eines Reaktors eingerichteten Halterung verbunden sind, wobei die Halterung den ATR-Sensor und den Ultraschallsender über zueinander parallele Rohre in montiertem Zustand frei in das Innere des Reaktors hineinragend hält.

Bei der vorliegenden FTR-Absorptionsspektroskopie-Einrichtung ragen somit der ATR-Sensor und der Ultraschallsender im montierten Zustand frei in das Innere des Reaktors hinein, wobei sie mit Hilfe der Halterung an der Wand oder Abdeckung des Reaktors gehalten sind. Dadurch kann direkt im Inneren des Reaktors die gewünschte Messung bzw. Prozessüberwachung durchgeführt werden, so dass mit geringstem apparativen Aufwand unmittelbar die gewünschten Prozessparameter erhalten werden können. An sich wäre es denkbar, den Ultraschallsender oberhalb des ATR-Sensors, d.h. von dessen Sensoroberfläche, anzubringen und in der an sich bekannten Weise (s. WO 2005/124 300 A1) die agglomerierten, zu erfassenden Partikel auf der Sensoroberfläche sedimentieren zu lassen. Zumeist wird jedoch in einem derartigen Reaktor eine Rühreinrichtung, zum Beispiel ein bodenseitiger, von außen über eine Welle angetriebener Rotor mit Rührschaufeln, gegebenenfalls aber auch ein Magnetrührer, eingesetzt, so dass die enthaltene Flüssigkeit einer Strömung und Mischung unterworfen ist. Dadurch kann jedoch, anders als im Falle einer äußeren, in einer Nebenschluss-(Bypass-)Leitung angebrachten Durchflusszelle, die Messung nicht einfach auf Basis einer derartigen Sedimentation durchgeführt werden. In diesem Fall ist es zweckmäßig, wenn der Ultraschallsender mit einer Frequenzeinstelleinheit verbunden ist, um durch Frequenzregelung die Position der Stehwelle im Messbereich zwischen dem Ultraschallsender und dem ATR-Sensor zu verändern und insbesondere eine Druckknotenebene, in der sich die Partikel in Agglomeraten gesammelt haben, gegen die Oberfläche des ATR-Sensors zu drücken. Dies hat auch den weiteren Vorteil, dass dann der Ultraschallsender und der ATR-Sensor in horizontaler Ausrichtung zueinander angebracht werden können, was unter anderem die Montage der Halterung mit dem ATR-Sensor und mit dem Ultraschallsender in der Öffnung der Reaktorwand, gegebenenfalls auch im Reaktordeckel, erleichtert.

Die Ultraschall-Frequenz kann in der aktiven Messphase, wenn die Druckknotenebene gegen die ATR-Sensor-Oberfläche verschoben werden soll, bei knapp 2 MHz, beispielsweise 1,8 oder 1,9 MHz, je nach zu messender Substanz, liegen; in den Messpausen kann die Frequenz um eine Größenordnung, auf etwa ein Zehntel, z.B. auf ca. 170 kHz, verringert oder ganz abgeschaltet werden, wobei dann mit Hilfe der Rühreinrichtung, insbesondere des Magnetrührers, durch die strömende Flüssigkeit ein Wechsel der Substanz im Messbereich erfolgt.

Zur Herbeiführung der Stehwelle kann dem Ultraschallsender gegenüber ein Ultraschallreflektor, gegebenenfalls auch ein gleicher Ultraschallsender, vorgesehen werden, wodurch Mittel vorgesehen sind, um durch Überlagerung der Ultraschallwellen eine Stehwelle zu erzeugen. Der Ultraschallreflektor kann, wie aus der WO 2005/124 300 bereits bekannt, durch den ATR-Sensor selbst oder aber eine dahinter liegende Schallreflektor-Fläche gebildet sein. Dadurch wird ein insgesamt außerordentlich einfacher Aufbau der eigentlichen Messanordnung der vorliegenden Absorptionsspektroskopie-Einrichtung erzielt.

Für die Halterung kann einfach ein standardmäßiger Ingold-Stutzen eingesetzt werden.

Der Träger für den Ultraschallsender kann durch ein Rohr gebildet sein, wobei im Inneren des Rohrs die erforderlichen elektrischen Leitungen verlaufen. Der Ultraschallsender selbst kann in an sich herkömmlicher Weise durch ein auf einem Macor- oder Glasplatten-Träger (Macor - eine spanend bearbeitbare Glaskeramik) angebrachtes Piezoelement (Piezowandler, Piezo-Transducer) gebildet sein, das mit den entsprechenden Elektroden versehen ist, um bei Anlegen einer elektrischen Spannung die mechanischen Schwingungen zu erzeugen, die zur Erzeugung der Ultraschallwellen erforderlich sind. In diesem Zusammenhang kann auch auf die WO 2005/124 300 A1 verwiesen werden.

Für den ATR-Sensor kann ebenfalls ein an sich herkömmlicher Aufbau gewählt werden, wobei bevorzugt Lichtwellenleiter (Faseroptiken) für die Zuleitung von Infrarotstrahlung von einem Interferometer zu einem ATR-Element des Sensors sowie für die Rückführung der Infrarotstrahlung nach Beeinflussung durch die Messsubstanzen im ATR-Element zu einem Detektor verwendet werden. Es ist aber auch eine direkte Einkopplung in das ATR-Element möglich.

Für die ATR-Elemente können unterschiedliche Materialien eingesetzt werden, wie z.B. Diamant, aber auch ZnSe, ZnS, Ge, Si, Saphir, KRS-5, Silberhalogenide (AgX) etc., wobei allen diesen Materialien gemein ist, dass sie im interessierenden Spektralbereich transparent sind, und dass sie einen ausreichend hohen Brechungsindex aufweisen. Diamant und ZnSe haben beispielsweise einen Brechungsindex im mittleren Infrarot von etwa 2,4, Germanium hat 4,0.

Aus Gründen der Anpassung an die jeweiligen Verhältnisse etwa in einem Bioreaktor, was die zu messenden Substanzen betrifft, kann es auch von Vorteil sein, wenn die Rohre für eine relative Längsverschiebung angeordnet sind, wodurch der ATR-Sensor und der Ultraschallsender relativ zueinander verstellbar gehalten sind. Dabei wird bevorzugt der ATR-Sensor, beispielsweise mit Hilfe einer Mikrometerschraube, relativ zur Halterung und relativ zum Ultraschallsender verstellt. Es sei aber erwähnt, dass für feste Anwendungen der vorliegenden Einrichtung eine derartige Verstellbarkeit auch entfallen kann.

Für verschiedene Anwendungen kann es weiters vorteilhaft sein, den eigentlichen Piezowandler seitlich anzubringen und einen dem ATR-Sensor gegenüberliegenden Schwinger über eine Modenwandlung in Schwingungen zu versetzen, um so die Ultraschallwellen in Richtung ATR-Sensor abzustrahlen. Demgemäß zeichnet sich eine günstige Ausführungsform dadurch aus, dass der Ultraschallsender mit einem mit dem ATR-Sensor verbundenen Schwingplättchen ausgebildet ist, das mit einem dazu winkelig angeordneten Träger verbunden ist, an dem ein Piezowandler angebracht ist.

Im Stand der Technik gibt es neben stirnseitig Infrarot-sensitiven ATR-Elementen für den ATR-Sensor auch kegelstumpfförmige ATR-Elemente, die seitlich (und nicht stirnseitig) Infrarot-sensitiv sind. Um auch derartige ATR-Elemente im Rahmen der vorliegenden Einrichtung einsetzen zu können, nämlich im Sinne einer Heranführung der zu messenden Substanzen an die sensitive Kegel-Mantelfläche, hat es sich als vorteilhaft erwiesen, wenn der ATR-Sensor eine Abdeck-Kappe mit einer Öffnung aufweist, die eine geneigte ringförmige Wand aufweist, die eine geneigte ringförmige Wand aufweist, innerhalb von der ein sich verjüngendes ATR-Element angeordnet ist, wobei die Wand entgegengesetzt zur Verjüngung des ATR-Elements geneigt ist. Dabei kann die Öffnung eine entgegengesetzt zur Verjüngung des ATR-Elements geneigte ringförmige Wand aufweisen. Dadurch wird ein günstiger Zugangsbereich für die zu messenden Substanzen vorgesehen. Als besonders vorteilhaft hat es sich erwiesen, dass die Wand der Öffnung und die durch die

Verjüngung gebildete Mantelfläche des ATR-Elements einen Winkel von 90° miteinander einschließen.
Zur Verlangsamung der Verschmutzung der Sensoroberfläche ist es vielfach auch günstig, wenn der ATR-Sensor ein mit einer Schutzschicht versehenes ATR-Element aufweist.

### Kurzbeschreibung der Zeichnung

Die Erfindung wird nachfolgend anhand eines in der Zeichnung veranschaulichten, besonders bevorzugten Ausführungsbeispiels, auf das sie jedoch nicht beschränkt sein soll, noch weiter erläutert. In der Zeichnung zeigen dabei im einzelnen:
Fig. 1 schematisch einen Schnitt durch einen Teil einer Wand eines Bioreaktors mit einer Einrichtung gemäß der Erfindung, mit einer Halterung in einer Öffnung der Reaktorwand und mit von dieser Halterung getragenen Mess- bzw. Sondenelementen;
Fig. 2 eine schaubildliche Ansicht der Einrichtung gemäß Fig. 1;
Fig. 3 eine aufgeschnittene schaubildliche Darstellung dieser Einrichtung gemäß Fig. 1 und 2, um eine Verstellmöglichkeit für den ATR-Sensor zu veranschaulichen;
Fig. 4 schematisch eine modifizierte Anordnung von Ultraschallwandler bzw. Ultraschallsender und ATR-Sensor;
Fig. 5 eine schaubildliche Detailansicht der ATR-Sonde in einer Ausführungsform mit einem in einer zylindrischen Kappe angeordneten kegelstumpfförmigen ATR-Element;
Fig. 6 die bei diesem ATR-Sensor gemäß Fig. 5 eingesetzte zylindrische Kappe in einer schaubildlichen Ansicht;
Fig. 7 in einem schematischen Schnitt den Bereich mit dem durch die Öffnung in der Kappe ragenden kegelstumpfförmigen ATR-Element;
die Fig. 8A und 8B Ansichten entsprechend Fig. 5, wobei die Agglomeration von Partikeln in Druckknotenebenen gezeigt ist, und wobei gemäß Fig. 8A die zu messenden Partikel noch in einem Abstand vor dem ATR-Element vorliegen, dieses jedoch nicht berühren, in der Darstellung gemäß Fig. 8B jedoch, nach Änderung der Frequenz des Ultraschallfeldes die zu messenden Partikel an das ATR-Element angedrückt gezeigt sind;
Fig. 9 in einem Diagramm als Beispiel den Verlauf der Peakhöhe einer Hefe-Absorptionsbande bei 1050cm⁻¹ über der Zeit, mit einer Darstellung der Änderung der Frequenzen während dieser Zeit; und
Fig. 10 in einem Diagramm IR-Absorptionsmessungen von Hefe in Wasser unter Einwirkung einer stehenden Ultraschallwelle, wobei in einer Kurve der Zustand veranschaulicht ist, in der die Partikel noch in Abstand vom ATR-Element vorliegen (vgl. Fig. 8A), bei einer weiteren Kurve der Zustand gemäß Fig. 8B, mit an das ATR-Element angedrückten Partikeln, zugrunde lag und in einer dritten Kurve eine Messung beim Spülen der Sensorfläche gezeigt ist.

### Detaillierte Beschreibung bevorzugter Ausführungsformen

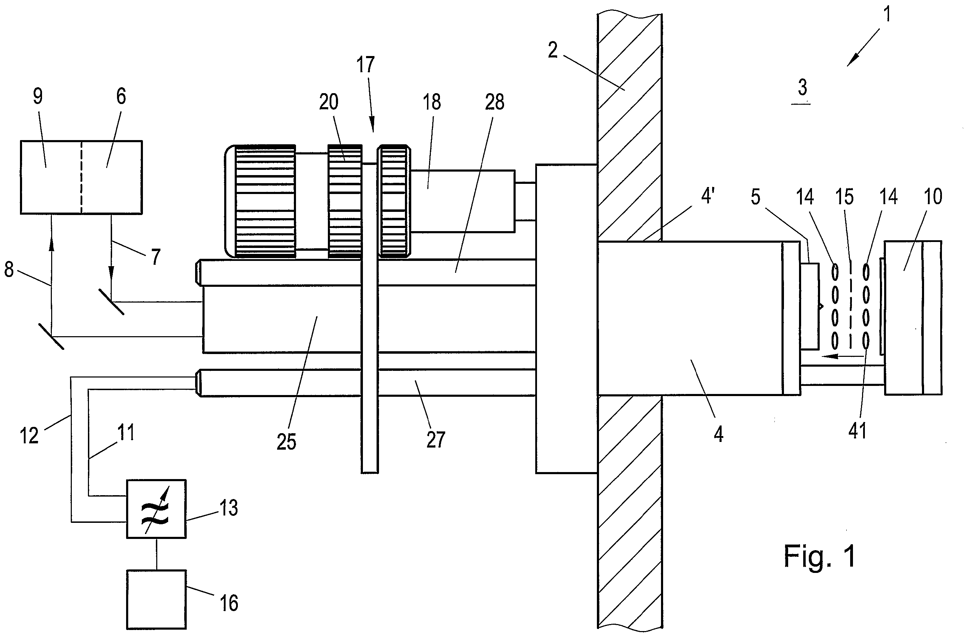

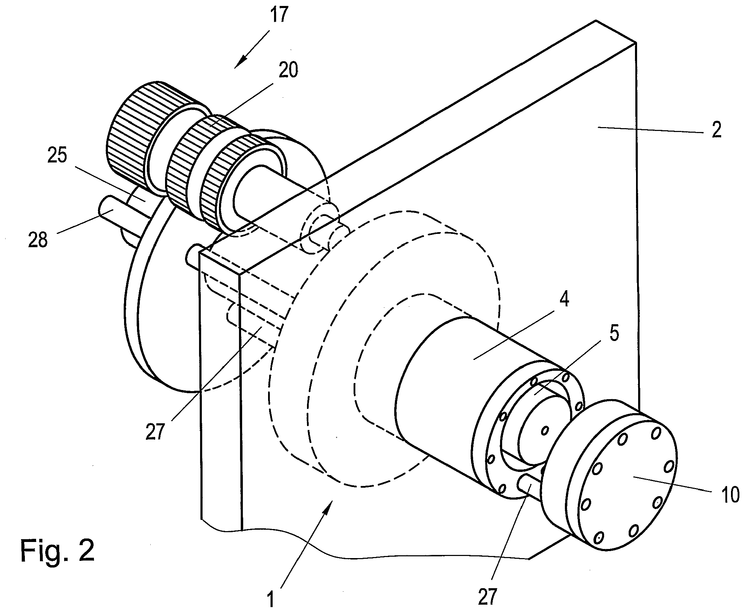

In Fig. 1 bis 3 ist schematisch eine FTIR-Absorptionsspektroskopie-Einrichtung 1 veranschaulicht, die entsprechend ihrem grundsätzlichen Aufbau herkömmlichen Einrichtungen entspricht, wie sie für IR-Spektroskopie, insbesondere für FTIR-ATR-Spektroskopie, verwendet werden. Diese Einrichtung 1 wird frei auskragend an einer Wand 2 eines Reaktors 3 zur Durchführung der gewünschten Messungen angebracht, wobei im einzelnen eine Halterung 4 in Form eines Ingold-Stutzens in einer Öffnung 4' der Reaktor-Wand 2 dicht angebracht ist. Mit der Einrichtung 1 können die zu untersuchenden Substanzen, insbesondere Mikroorganismen, z.B Hefezellen, bei der Überwachung von biotechnologischen Prozessen im Reaktor 3 im Wege der Absorptionsspektroskopie direkt erfasst werden.

An der Innenseite der Halterung 4 befindet sich ein vertikal angeordneter ATR-Sensor 5. Dabei wird eine beispielsweise von einem Interferometer 6 kommende Infrarotstrahlung über einen Lichtleiter 7 und z.B. über ein Zink-Selenid-Element einem als (in Fig. 1 bis 3 nicht näher dargestelltes) ATR-Element des ATR-Sensors 5 vorgesehenen Diamanten zugeführt und von diesem wiederum über einen Lichtleiter 8 zu einem Detektor 9 zurückgeleitet. Der ATR-Sensor 5 enthält somit als eigentliches Sensorelement das ATR-Element (Kristallelement) für die FTIR-ATR-Spektroskopie, wobei sich hierzu, da es sich um eine an sich herkömmliche Technik handelt, nähere Erläuterungen erübrigen können; es kann diesbezüglich insbesondere auf die WO 2005/124 300 A sowie die WO 02/082 061 A verwiesen werden, deren Offenbarung hier durch Bezugnahme als miteingeschlossen angesehen wird. Zu erwähnen ist nur, dass in der ATR-Spektroskopie verschiedene Materialien als ATR-Elemente eingesetzt werden, wie der erwähnte Diamant, aber auch ZnSe, ZnS, Ge, Si, Saphir, KRS-5, Silberhalogenide (AgX) und dgl. Materialien, die transparent (im interessierenden Spektralbereich) sind, und die einen geeigneten Brechungsindex aufweisen.

In Abstand vor dem ATR-Sensor 5 (nachstehend auch ATR-Sonde genannt) befindet sich ein Ultraschallsender 10 (Ultraschall-Transducer oder -Wandler), der beispielsweise ein (nicht gezeigtes) keramisches Piezoelement enthält, welches z.B. auf einem plättchenförmigen Macor- oder Glasträger (nicht gezeigt) aufgeklebt ist. Das Piezoelement weist nicht näher veranschaulichte Elektroden, z.B. aus Silber, auf, welche über elektrische Leitungen 11, 12 mit einem Frequenzgenerator 13, etwa einem Frequenzleistungs-Synthesizer FPS 4025, verbunden sind, um eine Schwingung beispielsweise im Bereich von 1,8 MHz bis 1,9 MHz zu erzeugen. Das elektrische Signal mit dieser Frequenz wird über die Leitungen 11, 12 an das Piezoelement, d.h. an dessen Elektroden, angelegt, so dass dieses eine entsprechende Ultraschallschwingung mit der Frequenz von 1,8 MHz bis 1,9 MHz erzeugt, die über den Glasträger abgegeben wird. Diese Ultraschallwelle wird gemäß der Darstellung in Fig. 1 horizontal zum ATR-Sensor 5 hin abgestrahlt, wobei z.B. der ATR-Sensor 5 selbst einen Ultraschall-Reflektor bildet und die Ultraschallwelle horizontal zum Ultraschallsender 10 zurück reflektiert, so dass eine stehende Ultraschallwelle zwischen den Komponenten 10 und 5 erhalten wird. Auf diese Weise wird ein Ultraschall-Stehwellenfeld in der Einrichtung 1 erzeugt, das Druckknotenebenen 14 bzw. Druckbauchebenen 15 hat, welche beim gezeigten ebenen Stehwellenfeld um eine Viertel-Wellenlänge voneinander beabstandet sind

(wobei in einem Stehwellenfeld weiters bekanntlich Druckknoten den Schallwellenbäuchen und umgekehrt Druckbauchstellen den Schallknotenstellen entsprechen). In Fig. 1 sind schematisch zwei Druckknotenebenen 14 und eine Druckbauchebene 15 veranschaulicht; selbstverständlich kann aber die Anzahl der Druckknotenebenen 14 bzw. Druckbauchebenen 15 variieren, wobei die Anzahl dieser Knotenebenen 14 bzw. Bauchebenen 15 von der Schallgeschwindigkeit der Einrichtung 1, d.h. vom im Reaktor 3 enthaltenen Medium, sowie insbesondere vom Abstand der Komponenten 10, 5 und von der Frequenz abhängt. Beispielsweise kann der Abstand 3,18 mm betragen. Die halbe Wellenlänge als Distanz zwischen beispielsweise zwei benachbarten Knotenebenen 14 kann beispielsweise in der Größenordnung von 0,3 mm liegen. Dies würde bedeuten, dass gut zehn Knotenebenen 14 zwischen den Komponenten 10, 5 gebildet werden. Denkbar sind jedoch selbstverständlich auch weniger Knotenebenen 14, z.B. bloß eine, bloß zwei oder bloß drei, ebenso wie mehr Knotenebenen 14, z.B bis zu 100 Knotenebenen.

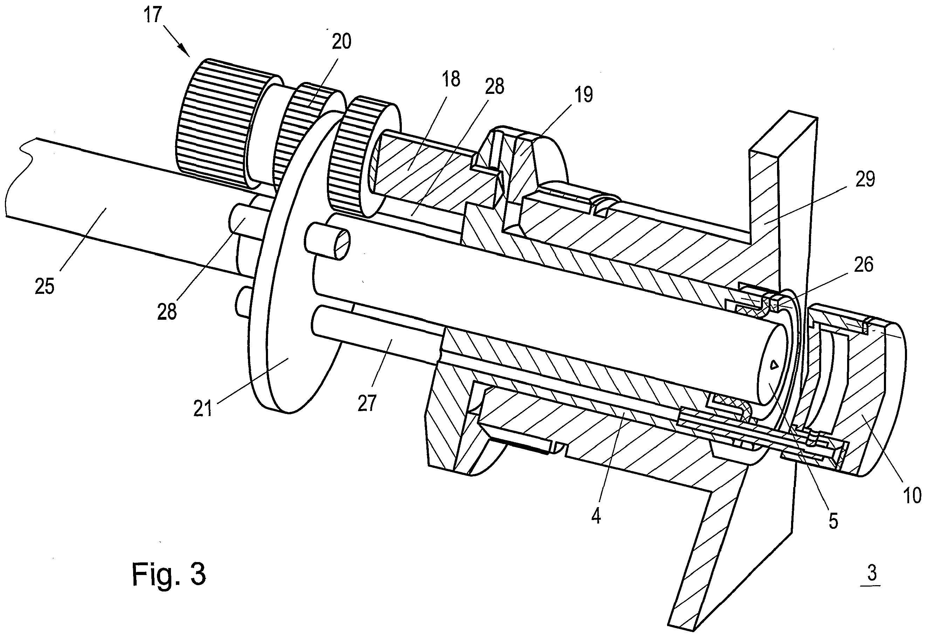

Die Einrichtung gemäß Fig. 1 bis 3 ist weiters mit der Möglichkeit einer Verstellung von ATR-Sonde 5 und Ultraschall-Sender 10 relativ zueinander ausgestattet. Mehr im einzelnen ist der ATR-Sensor bzw. die ATR-Sonde 5 axial verstellbar in der Halterung 4 gelagert, wie insbesondere aus Fig. 3 ersichtlich ist. Zum Verstellen der ATR-Sonde 5 innerhalb der beispielsweise aus Messing bestehenden Halterung 4 ist ein Mikrometerschrauben-Antrieb 17 vorgesehen, wobei sich eine Mikrometerschraube 18 an einem Flansch 19 der Halterung 4 abstützt und mit ihrer Verstell-Rändelmutter 20 mit einer Scheibe 21 fest gekuppelt ist, die ihrerseits mit einem zylindrischen Rohr 25 der ATR-Sonde 5 fest verbunden ist. In diesem Rohr 25 befinden sich die optischen Lichtwellenleiter (optischen Fasern) der ATR-Sonde 5, die jedoch der Einfachheit halber in Fig. 3 nicht näher veranschaulicht sind.

Die Sonde, d.h. genauer das Rohr 25, ist im vorderen Bereich der Halterung 4 mittels einer Membran 26 gegenüber dem Inneren des Reaktors 3 abgedichtet.

In Fig. 1 und 3 ist weiters noch das Träger-Rohr 27 für den Ultraschallsender 10 veranschaulicht, und es sind Führungsstangen 28 veranschaulicht. Weiters ist ein zur Wand 2 des Bioreaktors 3 gehöriger Anschlussteil 29 in Fig. 3 gezeigt, wobei dieser Anschlussteil 29 eine genormte Öffnung für die Halterung 4 im Sinne eines Ingold-Stutzens bildet, und die gesamte Sondenkonstruktion durch diese Öffnung in den Bioreaktor eingeführt werden kann, wie sich aus Fig. 3 unmittelbar ergibt.

Bei der beschriebenen Ausbildung verstellt die Mikrometerschraube 17 die ATR-Sonde 5 über deren Rohr 25 bei gleichzeitig stillstehender Sondenhalterung 4. Durch die Membran 26 im vorderen Bereich der Fasersonde wird eine bewegliche Abdichtung gegenüber dem Innenbereich des Bioreaktors 3 erzielt. Bei einer Längenverstellung der Mikrometerschraube 17 verschiebt sich in entsprechendem Ausmaß die ATR-Sonde 5 mit dem Rohr 25 in der durch die Halterung 4 gegebenen Messing-Ummantelung. Die Halterung 4 ist bündig mit dem Öffnungsrand in der Wand des Bioreaktors 3, d.h. des Anschlussteils 29.

Für fest vorgesehene Anwendungen kann sich eine derartige Verstellbarkeit, wie vorstehend beschrieben, durchaus erübrigen, sie ist jedoch sicherlich dann von Vorteil, wenn verschiedene Suspensionen bzw. Trägerflüssigkeiten gegeben sein können, ebenso, wenn im Betrieb starke Temperaturveränderungen oder auch starke Veränderungen der Teilchenkonzentration vorliegen können.

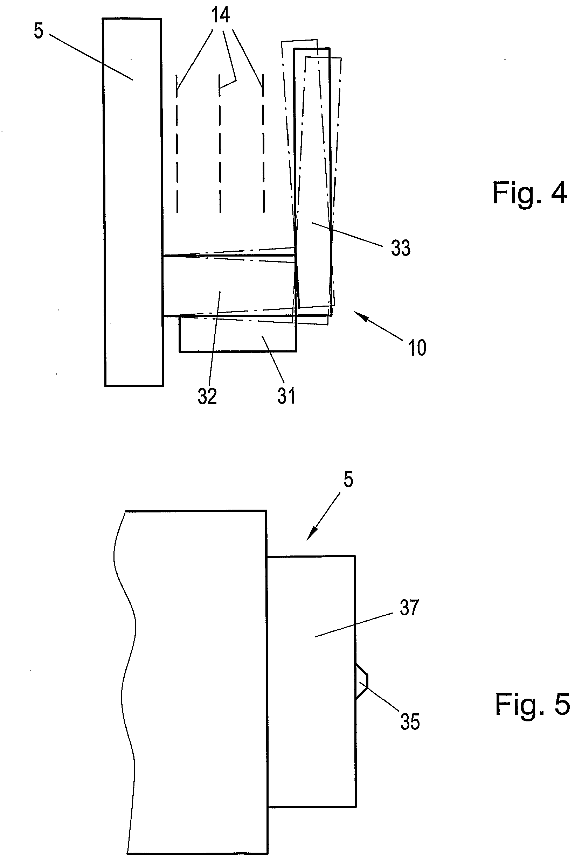

In Fig. 4 ist ganz schematisch eine Modifikation des Sondenkopfes mit dem ATR-Sensor 5 und dem Ultraschallsender 10 veranschaulicht. Dabei ist in diesem Ausführungsbeispiel der Ultraschallsender 10 mit einem Piezoelement 31 versehen, welches quer zur Sensoroberfläche angeordnet und dabei an einem als Schwinger ausgebildeten Träger 32 angebracht ist, dessen Auslenkungen in Fig. 4 schematisch durch verschiedene Umrisslinien angedeutet sind. Quer zu diesem beispielsweise wandförmigen Träger 32 ist ein Schwingplättchen 33 angebracht, dessen Hauptfläche der Stirnfläche des ATR-Sensors 5 gegenüberliegt, und das im Betrieb vom Piezoelement 31 über den Träger 32 in entsprechende Schwingung versetzt wird, wie ebenfalls schematisch mit mehreren Umrisslinien in Fig. 4 angedeutet ist. Auf diese Weise wird näherungsweise eine ebene Schallwelle erzeugt, die in Richtung der ATR-Sonde 5 emittiert wird. Bei Reflexion der Schallwelle an der Stirnfläche der ATR-Sonde 5 wird durch die Überlagerung der beiden Ultraschallwellen eine Stehwelle, mit Druckknotenebenen 14, wie erwähnt, erzeugt.

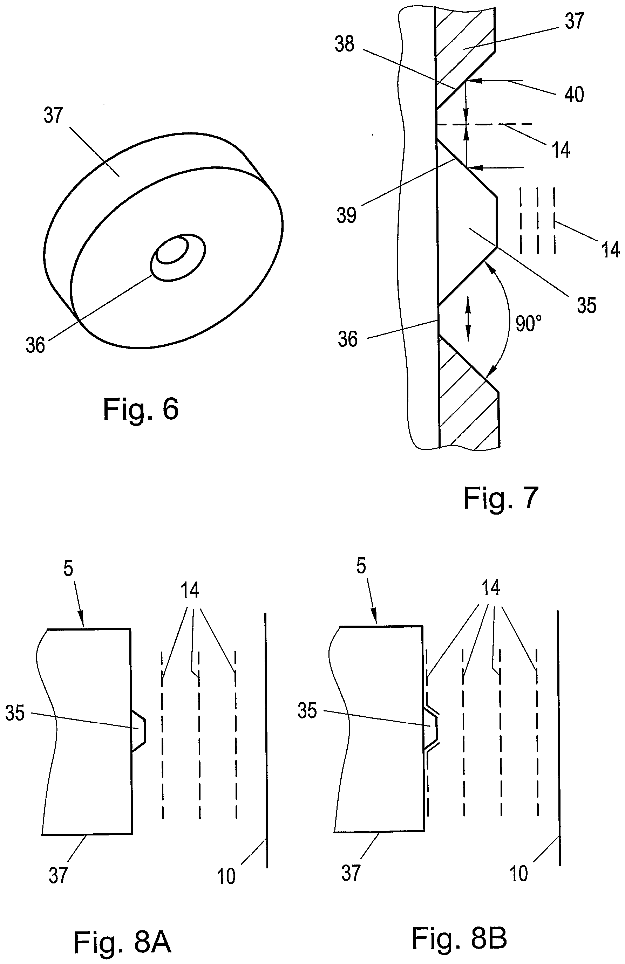

Der ATR-Sensor 5 kann wie bereits vorstehend angeführt beispielsweise derart wie in der eingangs erwähnten WO 05/124 300 A gezeigt, nämlich insbesondere mit einem planen, stirnseitig Infrarot-empfindlichen ATR-Element, ausgebildet sein. Eine andere Möglichkeit ist in den Fig. 5 bis 7 gezeigt. Bei dieser Ausbildung ist ein kegelstumpfförmiges ATR-Element 35 vorgesehen, das durch eine mittige Öffnung 36 in einer z.B. zylindrischen Kappe 37 ragt. Die Öffnung 36 hat eine entgegengesetzt geneigte Ring-Wand 38, wobei die Kegel-Mantelfläche 39 des ATR-Elements 35 und die Ring-Wand 38 der Öffnung 36 insbesondere einen Winkel von 90° miteinander einschließen, wie aus Fig. 7 ersichtlich ist. Die Mantelfläche 39 des ATR-Elements 35 ist hier die Infrarotempfindliche Sensorfläche (und nicht die vordere Stirnseite; insofern würden an dieser Stirnfläche die Druckknotenebenen 14 zu keinem Messergebnis führen). Die einfallenden Ultraschallwellen 40 werden jedoch, wie mit den Pfeilen in Fig. 7 gezeigt, an den zum Lot hin um 45° geneigten Abschrägungen der Flächen 38, 39 reflektiert, wobei sich im ringförmigen Zwischenraum zwischen den Flächen 38, 39 (mit keilförmigem Querschnitt) offenbar ebenfalls Stehwellen, mit Drucknotenebenen 14, ausbilden können. Die zu messenden Teilchen werden dann in diesen Druckknotenebenen 14 gehalten und können aufgrund ihrer Nähe oder Anlage am ATR-Element 35 detektiert werden.

Eine derartige Anordnung mit einer Kappe 37 ist selbstverständlich dann nicht erforderlich, wenn ein an seiner Stirnfläche empfindliches ATR-Element verwendet wird, vgl. beispielsweise die WO 05/124 300 A.

Partikel, beispielsweise Polymerbeads, die in der Flüssigkeit im Reaktor 3 suspendiert sind, sammeln sich wie erwähnt in den Drucknotenebenen 14 der stehenden Ultraschallwellen. Vor allem in einem zentralen Bereich, bezogen auf den Ultraschallsender 10 und den ATR-Sensor 5, d.h. in Nachbarschaft einer Mittenachse dieser beiden koaxial zueinander ausgerichteten Komponenten 10, 5, bilden sich Teilchenagglomerate 41 (s. Fig. 1), da im Ultraschall-Stehwellenfeld in den Druckknoten-Ebenen 14 die Teilchen konzentriert werden, und zwar aufgrund der Wirkung von axialen primären Schallstrahlungskräften, die auf die Teilchen einwirken, sowie weiters aufgrund von transversalen, primären Schallstrahlungskräften, die darauf zurückzuführen sind, dass das Ultraschallfeld an vorgegebenen Stellen, z.B. in der Mitte, in der Regel stärker ist als in den Randbereichen. Dadurch bildet sich in der jeweiligen Druckknotenebene 14 eine Art Kette von Teilchenagglomeraten.

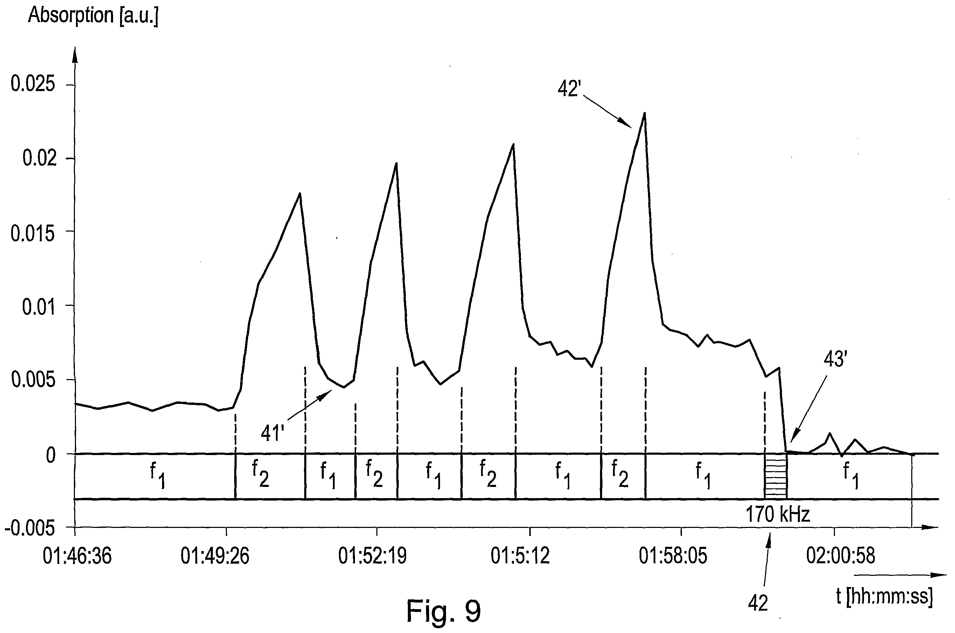

Es sei hier erwähnt, dass die Konzentration von Teilchen auf einer Achse ein beispielhafter Fall ist, der sich aufgrund einer Zylindersymmetrie und einer entsprechenden Elektrodenform ergibt; es sind aber selbstverständlich auch Ausbildungen mit mehreren solchen "Hotspots" möglich, wenn Maxima der transversalen Schallstrahlungskraft über die Piezowandler-Oberfläche auftreten.
- bei einer Frequenz f₂=1,869 MHz (vgl. Fig. 8B sowie Fig. 9) waren fast alle Partikel der ersten Druckknotenebene 14 an das ATR-Element 35 des Sensors 5 angedrückt.

Auf diese Weise gelingt es, die angedrückten Partikel optimal mit der ATR-(Faser)Sonde 5 zu spektroskopieren, um Sequenzen von nacheinander aufgenommenen Spektren zu erhalten, d.h. von Infrarot-Absorptionsspektren betreffend die suspendierten, an die Sensoroberfläche angedrückten Partikel.

Bei dieser spektroskopischen Untersuchung kann im Fall eines Reaktors 3 mit einer (nicht näher veranschaulichten, an sich herkömmlichen) Rühreinrichtung, insbesondere einem Magnetrührer, bevorzugt etwa wie folgt vorgegangen werden.
- Nach einer Anlagerung der suspendierten Partikel am ATR-Element 35 und Durchführung der ATR-Absorptionsspektroskopie, beispielsweise bei einer Frequenz von f₂=1,87 MHz, wird die Frequenz des Ultraschallfeldes auf 170 kHz reduziert (vgl. Fig. 9, Bereich 42), wodurch sich in der Suspension Strömungen ausbilden, welche geeignet sind, die an das ATR-Element zuvor angedrückten Partikel von diesem wegzuspülen; die Absorption am ATR-Element des ATR-Sensors 5 sinkt damit praktisch auf Null (abgesehen von der Absorption zufolge der bloßen Flüssigkeit, die nicht Null wird).
- Danach wird die Frequenz des Ultraschallfeldes wieder auf den MHz-Bereich erhöht, wobei es bei einer Frequenz von f₂=1,87 MHz wiederum zu einer Anlagerung der Partikel an der Sensorfläche kommt, so dass die Absorption steigt. Danach wird die Frequenz wieder auf beispielsweise 170 kHz reduziert, um die angelagerten Partikel wieder wegzuspülen.

Anstatt der Reduktion auf 170kHz kann die Ultraschall-Frequenz auch ganz abgeschaltet werden.

Auf diese Weise können die Partikel kontrolliert mit Hilfe des Ultraschallfeldes an den ATR-Sensor 5 herangeführt, spektroskopiert und anschließend wieder entfernt werden.

In Zusammenhang mit dem Wegspülen der Partikel und dem nachfolgenden Heranführen von suspendierten Partikeln in den Messbereich hat es sich bei Versuchen auch als zweckmäßig erwiesen, die Drehgeschwindigkeit des magnetischen Rührers in den Pausenzeiten kurzfristig, etwa für ca. fünf Sekunden, zu erhöhen; es hat sich gezeigt, dass dann bei Anlegen des Ultraschallfeldes zur Absorptionsspektroskopie eine verstärkte Anlagerung von Partikeln an der Sensorfläche und damit eine verstärkte Absorption festzustellen ist. Ein Grund hierfür könnte sein, dass in der Flüssigkeit kleine Luftblasen vorhanden waren, die eine Anlagerung der Partikel zunächst verhinderten und durch die erhöhte Rührgeschwindigkeit vom ATR-Element 35 wegbewegt wurden; auch konnte durch die bei den Versuchen erhöhte Drehgeschwindigkeit ein verstärktes Heranführen von Partikeln aus anderen Bereichen im Reaktor 3 in den Messbereich der Einrichtung 1 bewirkt werden. Beispielsweise betrug in den Versuchen die normale Drehgeschwindigkeit des Magnetrührers ca. 280 U/min, und kurzzeitig wurde diese Drehgeschwindigkeit auf einen Wert in der Größenordnung von 800 U/min erhöht.

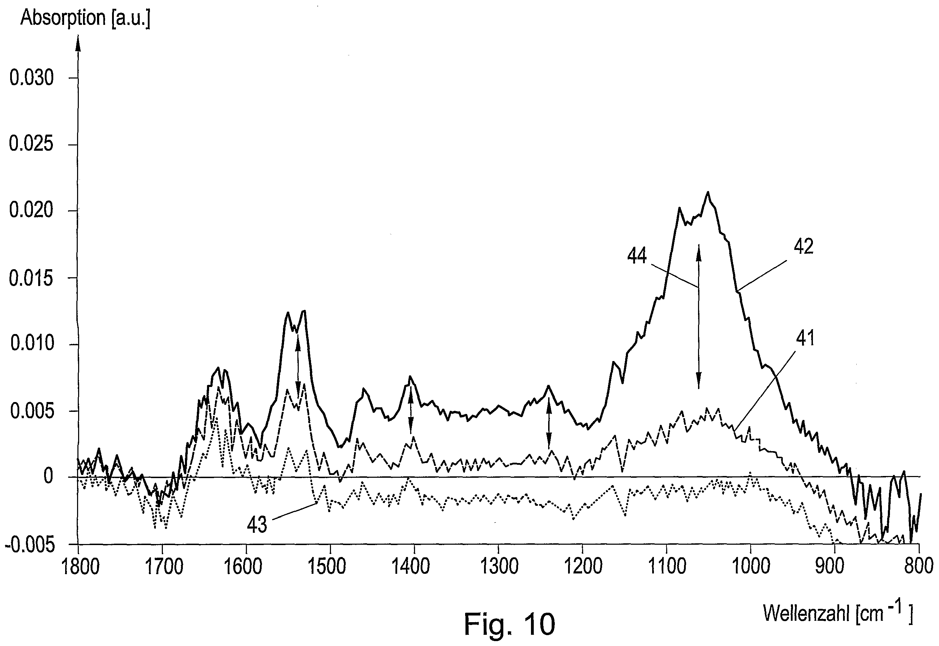

Die Diagramme gemäß Fig. 9 und 10 beziehen sich auf beispielhafte Testmessungen, nämlich IR-Absorptionsmessungen von Hefe in H₂0, unter Einwirkung von stehenden Ultraschallwellen, wobei in Fig. 9 der Verlauf der Peakhöhe der Hefe-Absorptionsbande bei einer Wellenzahl von 1050cm⁻¹ veranschaulicht ist, und wobei zu bestimmten Zeiten, wie auf der Abszisse angegeben, Messungen durchgeführt wurden. Konkret wurde zum Zeitpunkt 01:51:33, zu einem Zeitpunkt, wo die Frequenz der Ultraschallwellen f₁ war, eine Messung vorgenommen, weiters zum Zeitpunkt 01:57:13, bei einer Frequenz f₂, wie vorstehend erläutert, wobei die Teilchenagglomerate an das ATR-Element angedrückt wurden, und schließlich noch zu einem Zeitpunkt 02:00:13, während einer Spülung, mit 170 kHz, im Bereich 42 gemäß Fig. 9. Die Absorption ist in den Fig. 9 und 10 jeweils in beliebigen Einheiten (a.u.-arbitrary units) veranschaulicht. Die Zeitpunkte für die Vornahme der Messung sind in Fig. 9 bei 41' bzw. 42' bzw. 43' angedeutet, und die entsprechenden Messkurven sind in Fig. 10 die Kurven 41, 42 und 43.

Mit den Frequenzen f₁ und f₂ sind ganz allgemein zwei unterschiedliche Frequenzen des Ultraschallfeldes angegeben, bei denen das Fernhalten von Teilchen vom ATR-Element (Frequenz f₁) bzw. das Andrücken der suspendierten, agglomerierten Teilchen (Frequenz f₂) wie vorstehend angeführt erfolgt. Die Frequenzen können selbstverständlich von den vorstehend beispielhaft angegebenen Werten - je nach Messsubstanz - variieren. Die Frequenzen f₁ und f₂ hängen weiters von der Resonatorlänge, d.h. dem Abstand zwischen der Stirnseite des Ultraschallsenders 10 und der Stirnfläche des ATR-Sensors 5, ab. Bei der Frequenz f₁ befinden sich die suspendierten Teilchen wie erwähnt noch im Abstand der Sensorfläche, so dass bei der Messung eine niedrige Absorption im IR-Spektrum festgestellt wird. Bei Anlegen der Frequenz f₂ ändert sich dann die räumliche Kräfteverteilung im Ultraschallfeld, und die suspendierten Teilchen werden an den ATR-Sensor heranbewegt bzw. in dessen Detektionsbereich (s. Fig. 5 bis 7) hineingedrückt, so dass eine hohe Absorption im IR-Spektrum das Ergebnis ist. Dies ist auch durch einen Vergleich der Kurven 41 und 42 in Fig. 10 zu ersehen, wobei die Differenzen in den erhaltenen Absorptionswerten mit Pfeilen, z.B. Pfeil 44, angedeutet sind. Wie erwähnt können die Frequenzen f₁ und f₂ je nach den Umständen verschieden von den vorstehend angegebenen beispielhaften Werten sein, und insbesondere betrugen diese Frequenzen bei den Testmessungen gemäß Fig. 9 und 10 f₂=1,878 MHz und f₁=1,863 MHz. In der Regel liegen die verwendbaren Frequenzen im Bereich zwischen 1,7 MHz und 2 MHz, wobei sich dieser Bereich z.B. bei Verwendung anderer piezokeramischer Materialien für den Ultraschallsender (andere Schallgeschwindigkeit), aber auch bei einem anderen Aufbau (z.B. bei einer anderen Dicke des Piezowandlers oder des Trägers) ändern kann. In der Praxis ergibt sich der jeweilige Frequenzbereich aufgrund der gewünschten Anwendung, d.h. der suspendierenden Flüssigkeit, der Teilchen, der Schallgeschwindigkeit dieser beiden Komponenten, der Größe der Teilchen etc., gegebenenfalls auch der Dämpfung.

An sich wäre bei den Testmessungen zu erwarten gewesen, dass bei Anlegen der Frequenz f₁ (s. Kurve 41 in Fig. 10) eine Nulllinie erhalten wird; dass dies nicht der Fall ist, ist auf die auftretende Verschmutzung des ATR-Elements aufgrund der längeren Messdauer zurückzuführen. Die dritte Kurve 43 zeigt ein Messergebnis, wenn das ATR-Element des ATR-Sensors 5 bei einer wesentlich niedrigeren Ultraschallfrequenz von 170 kHz gereinigt wurde, wodurch sich wesentlich geringere Absorptionswerte ergeben.

Im Hinblick auf die Verschmutzung des ATR-Elements kann es auch günstig sein, ein ATR-Element mit einer dünnen Schutzschicht (z.B. mit einer Stärke von wenigen nm bis zu rund 1 µm) einzusetzen. Derartige Schutzschichten können die Bildung von Schmutzschichten verlangsamen und daher unter Umständen vorteilhaft verwendet werden. Als Beispiel kann hier die Bildung von sog. "self-assembling monolayers", sog. SAM-Schichten, auf Si oder Ge angeführt werden.

Bei einer geringen Teilchenkonzentration ist es möglich, dass die Teilchen aus dem Volumen zwischen zwei Druckknotenebenen, nach entsprechender Agglomeration, nicht ausreichen, um ein verlässliches optisches Messsignal zu liefern. Es ist dann günstig, mittels DRF (DRF-Drifting Resonance Field-Trennung) zusätzliche Partikel an die Sensorfläche heranzuführen. Bei dieser Technik wird von einer Resonanzfrequenz zu einer anderen gesprungen, wobei darauf geachtet wird, dass die Stellen, an denen sich Teilchen sammeln, immer "in eine Richtung" liegen. Nach einem Zyklus von einigen Resonanzfrequenzen sind die Agglomerate etwas mehr als eine halbe Wellenlänge weitergewandert, und es kann wieder mit der ersten Resonanzfrequenz begonnen werden. Dies führt dazu, dass zusätzliche Partikel an einem bestimmten Ort - die Sensoroberfläche - transportiert werden.

Dieses Heranbewegen von Teilchen in einem Ultraschallfeld ist an sich aus dem Artikel B. Handl et al., " Particle trajectories in a drifting resonance field separation device", Jasa 103 (1998): 2947-2975, bekannt. Diese Technik ist für die vorliegende Einrichtung vorteilhaft, da die Qualität der Messung von einer möglichst dichten Bedeckung des ATR-Sensors 5 mit Teilchen abhängig ist.

## Patentansprüche

1. Einrichtung (1) zur FTIR-Absorptionsspektroskopie, mit einem ATR-Sensor (5) sowie mit wenigstens einem Ultraschallsender (10) zur Erzeugung eines Ultraschallfeldes in der Art einer Stehwelle, **dadurch gekennzeichnet, dass** der ATR-Sensor (5) und der Ultraschallsender (10) mit einer zur Anbringung in einer Öffnung (4') in einer Wand (2) oder Abdeckung eines Reaktors (3) eingerichteten Halterung (4) verbunden sind, wobei die Halterung (4) den ATR-Sensor (5) und den Ultraschallsender (10) über zueinander parallele Rohre (25, 27) in montiertem Zustand frei in das Innere des Reaktors (3) hineinragend hält.

2. Einrichtung nach Anspruch 1, **dadurch gekennzeichnet, dass** der Ultraschallsender (10) mit einer Frequenzeinstelleinheit (16) verbunden ist, um durch Einstellung der Frequenz den Ort einer Druckknotenebene (14) der Stehwelle an die Oberfläche des ATR-Sensors (5) zu verschieben.

3. Einrichtung nach Anspruch 2, **dadurch gekennzeichnet, dass** die Ultraschall-Frequenz mittels der Frequenzeinstelleinheit (16) zwischen ca. 1,8-1,9 MHz und ca. 170 kHz umschaltbar oder ganz abschaltbar ist.

4. Einrichtung nach Anspruch 2 oder 3, **dadurch gekennzeichnet, dass** der Ultraschallsender (10) dem ATR-Sensor (5) in im Betrieb horizontaler Ausrichtung gegenüberliegt.

5. Einrichtung nach einem der Ansprüche 1 bis 4, **dadurch gekennzeichnet, dass** der ATR-Sensor (5) einen Ultraschallreflektor bildet.

6. Einrichtung nach einem der Ansprüche 1 bis 5, **dadurch gekennzeichnet, dass** die Halterung (4) einen Ingold-Stutzen aufweist.

7. Einrichtung nach einem der Ansprüche 1 bis 6, **dadurch gekennzeichnet, dass** die Rohre (25, 27) für eine relative Längsverschiebung angeordnet sind, wodurch der ATR-Sensor (5) und der Ultraschallsender (10) relativ zueinander verstellbar gehalten sind.

8. Einrichtung nach einem der Ansprüche 1 bis 7, **dadurch gekennzeichnet, dass** der Ultraschallsender (10) mit einem mit dem ATR-Sensor (5) verbundenen Schwingplättchen (33) ausgebildet ist, das mit einem dazu winkelig angeordneten Träger (32) verbunden ist, an dem ein Piezowandler (31) angebracht ist.

9. Einrichtung nach einem der Ansprüche 1 bis 8, **dadurch gekennzeichnet, dass** der ATR-Sensor (5) eine Abdeck-Kappe (37) mit einer Öffnung (36) aufweist, die eine geneigte ringförmige Wand (38) aufweist, innerhalb von der ein sich verjüngendes ATR-Element (35) angeordnet ist, wobei die Wand (38) entgegengesetzt zur Verjüngung des ATR-Elements (35) geneigt ist.

10. Einrichtung nach Anspruch 9, **dadurch gekennzeichnet, dass** die Wand (38) der Öffnung (36) und die durch die Verjüngung gebildete Mantelfläche (39) des ATR-Elements (35) einen Winkel von 90° miteinander einschließen.

11. Einrichtung nach einem der Ansprüche 1 bis 10, **dadurch gekennzeichnet, dass** der ATR-Sensor (5) ein mit einer Schutzschicht versehenes ATR-Element (35) aufweist.

12. Einrichtung nach einem der Ansprüche 1 bis 11, **dadurch gekennzeichnet, dass** der ATR-Sensor (5) einen Diamanten als ATR-Element (35) enthält.

## Claims

1. A device (1) for FTIR absorption spectroscopy, with an ATR sensor (5) and at least one ultrasonic transmitter (10) for generating an ultrasonic field in the manner of a standing wave, **characterised in that** the ATR sensor (5) and the ultrasonic transmitter (10) are connected to a holding fixture (4) set up for mounting in an opening (4') in a wall (2) or cover of a reactor (3), wherein the holding fixture (4) holds the ATR sensor (5) and the ultrasonic transmitter (10) via mutually parallel tubes (25, 27) freely projecting into the interior of the reactor (3) in the installed state.

2. The device according to claim 1, **characterised in that** the ultrasonic transmitter (10) is connected to a frequency adjustment unit (16), in order to displace the location of a pressure node plane (14) of the standing wave to the surface of the ATR sensor (5) by adjusting the frequency.

3. The device according to claim 2, **characterised in that** the ultrasonic frequency can be switched over between approximately 1.8-1.9 MHz and approximately 170 kHz or can be completely switched off by means of the frequency adjustment unit (16).

4. The device according to claim 2 or 3, **characterised in that** the ultrasonic transmitter (10) lies opposite the ATR sensor (5) in horizontal alignment when in operation.

5. The device according to any one of claims 1 to 4, **characterised in that** the ATR sensor (5) forms an ultrasonic reflector.

6. The device according to any one of claims 1 to 5, **characterised in that** the holding fixture (4) comprises an ingold connection.

7. The device according to any one of claims 1 to 6, **characterised in that** the tubes (25, 27) are arranged for a relative longitudinal displacement, as a result of which the ATR sensor (5) and the ultrasonic transmitter (10) are held displaceably relative to one another.

8. The device according to any one of claims 1 to 7, **characterised in that** the ultrasonic transmitter (10) is constituted with an oscillating plate (33) connected to the ATR sensor (5), which oscillating plate is connected to a support (32), which is arranged at an angle thereto and on which a piezo-transducer (31) is mounted.

9. The device according to any one of claims 1 to 8, **characterised in that** the ATR sensor (5) comprises a cover cap (37) with an opening (36), which comprises an inclined annular wall (38), within which a tapering ATR element (35) is arranged, wherein the wall (38) is inclined inversely to the taper of the ATR element (35) .

10. The device according to claim 9, **characterised in that** the wall (38) of the opening (36) and of the lateral surface (39) of the ATR element (35) formed by the taper enclose an angle of 90° with one another.

11. The device according to any one of claims 1 to 10, **characterised in that** the ATR sensor (5) comprises an ATR element (35) provided with a protective layer.

12. The device according to any one of claims 1 to 11, **characterised in that** the ATR sensor (5) contains a diamond as an ATR element (35).

## Revendications

1. Installation (1) de spectroscopie d'absorption FTIR, pourvue d'un capteur ATR (5), ainsi que d'au moins un émetteur d'ultrasons (10) destiné à créer un champ ultrasonore, à la manière d'une onde stationnaire, **caractérisée en ce que** le capteur ATR (5) et l'émetteur d'ultrasons (10) sont assemblés avec une fixation (4) agencée pour être montée dans un orifice (4') dans une paroi (2) ou couverture d'un réacteur (3), la fixation (4) maintenant le capteur ATR (5) et l'émetteur d'ultrasons (10) en saillie libre à l'intérieur du réacteur (3), par l'intermédiaire de tubes (25, 27) parallèles les uns aux autres dans la position montée.

2. Installation selon la revendication 1, **caractérisée en ce que** l'émetteur d'ultrasons (10) est connecté sur un module régleur de fréquence (16) pour déplacer, par réglage de la fréquence, le lieu d'un plan de noeud de pression (14) de l'onde stationnaire sur la surface du capteur ATR (5).

3. Installation selon la revendication 2, **caractérisée en ce que** la fréquence ultrasonore est commutable au moyen du module régleur de fréquence (16) entre env. de 1,8 à 1,9 MHz et env. 170 kHz ou peut être totalement désactivée.

4. Installation selon la revendication 2 ou 3, **caractérisée en ce que** l'émetteur d'ultrasons (10) est placé au vis-à-vis du capteur ATR (5) dans l'orientation horizontale en service.

5. Installation selon l'une quelconque des revendications 1 à 4, **caractérisée en ce que** le capteur ATR (5) forme un réflecteur d'ultrasons.

6. Installation selon l'une quelconque des revendications 1 à 5, **caractérisée en ce que** la fixation (4) comporte un manchon de type Ingold.

7. Installation selon l'une quelconque des revendications 1 à 6, **caractérisée en ce que** les tubes (25, 27) sont placés pour un déplacement longitudinal relatif, suite à quoi, le capteur ATR (5) et l'émetteur d'ultrasons (10) sont maintenus étant ajustables l'un par rapport à l'autre.

8. Installation selon l'une quelconque des revendications 1 à 7, **caractérisée en ce que** l'émetteur d'ultrasons (10) est conçu avec une plaquette oscillante (33) assemblée avec le capteur ATR (5), qui est assemblée avec un support (32) placé sous un angle avec celle-ci, sur lequel est monté un convertisseur piézoélectrique (31).

9. Installation selon l'une quelconque des revendications 1 à 8, **caractérisée en ce que** le capteur ATR (5) comporte un capot protecteur (37) pourvu d'un orifice (36) qui comporte une paroi (38) annulaire oblique, à l'intérieur de laquelle est placé un élément ATR (35) qui se rétrécit, la paroi (38) étant inclinée à l'opposée du rétrécissement de l'élément ATR (35).

10. Installation selon la revendication 9, **caractérisée en ce que** la paroi (38), l'orifice (36) et la surface d'enveloppe (39) formée par le rétrécissement de l'élément ATR (35) englobent ensemble un angle de 90°.

11. Installation selon l'une quelconque des revendications 1 à 10, **caractérisée en ce que** le capteur ATR (5) comporte un élément ATR (35) muni d'une couche protectrice.

12. Installation selon l'une quelconque des revendications 1 à 11, **caractérisée en ce que** le capteur ATR (5) contient un diamant en tant qu'élément ATR (35).
